# EUROPEAN PATENT SPECIFICATION

(11) **EP 3 387 311 B1**
(45) Date of publication and mention of the grant of the patent: **25.03.2020**
(21) Application number: 17717905.8
(22) Date of filing: 22.02.2017
(51) Int. Cl.: F16L 19/025, F16L 19/028, F16L 19/04

(54) **A TUBE-TO-TUBE CONNECTION DEVICE AND METHOD OF SAME**
ROHR-ZU-ROHR-VERBINDUNGSVORRICHTUNG UND VERFAHREN DAFÜR
DISPOSITIF ET PROCÉDÉ DE RACCORDEMENT TUBE À TUBE

(43) Date of publication of application: 17.10.2018
(73) Proprietor: Bantboru Sanayi Ve Ticaret Anonim Sirketi, 41480 Gebze/Kocaeli (TR)
(72) Inventor: KOYUNCU, Ozan, 41480 Gebze/Kocaeli (TR)
(74) Representative: Kaya, Erdem
(86) International application number: PCT/TR2017/000032
(87) International publication number: WO 2018/097808

(56) References cited:
- WO-A1-2013/050106
- FR-A- 1 595 277
- GB-A- 2 170 568
- US-A- 1 987 100
- US-A- 2 251 715

## Description

### TECHNICAL FIELD

The present invention relates to an improved device against the detachment of a sleeve connection of two tubes, especially flared tubes, to each other, and a method of same.

### BACKGROUND OF THE INVENTION

Leak-proof fluid transfer from a tube, through which fluid flows, to another one is mainly performed by means of flared tubes. An end of one of the tubes to be connected is crimped outward (male) whereas an end of the other is crimped inward (female) and the tubes are pressed against each other so as to be connected. Especially in some applications wherein high pressure fluid transfer is performed, flared-end connection must be foolproof.

In tube-to-tube connections, connection of tubes by being pressed against each other is carried out by means of sleeves consisted of a female piece and a male piece screwed thereto, as disclosed for instance in DIN 74234. The tube with female flared-end is mainly inserted into the female sleeve and the tube with male flared-end is inserted into the male sleeve so that connection is achieved. Here, prior to connection, both the female sleeve and the male sleeve are free to move along an axis of the tubes carried by them.

Based on the assembly in which the tube-to-tube connection is to be used, screwing and torquing of a male sleeve to a female sleeve may have some limitations. For example, in tube connections of automobiles conveying the brake fluid, the amount of torque to be applied to the male sleeve is not allowed to exceed a predetermined standard value. In fact, excess torquing may produce plastic deformations on the mechanic components and may also cause torsion on the tubes within the elastic limits, the latter case may in time result in detachment of the tube connection, because when the tube is elastically twisted, it will start to restore its initial form, i.e. its unloaded situation, like a compressed spring which will start to restore its initial form due to the energy accumulated.

It is known from the prior art that a tube-to-tube connection of the above-mentioned type has some drawbacks. First of all, it is often not possible that the axes of the tubes to be connected are not perfectly aligned, which causes insufficient sealing after the connection. Yet another problem is that due to the energy accumulation on the tube during torquing, the connection is released over time, as mentioned above. One of the main reasons of such problems results from relative movement of the tubes with respect to the sleeves during torquing. In fact, during torquing, an axial displacement occurs, to some extent, while the tubes are linearly moved close to each other.

FR 1 595 277 discloses a tube-to-tube connection having a female sleeve receiving a flared first tube and a male sleeve receiving a flared second tube. The first tube is shrink fit to the female sleeve in axial direction. Such an engagement would not prevent the tube to store energy due to elastic displacement when a torque is applied through the male sleeve during connection of the second tube.

GB 2 170 568 discloses a tube-to-tube connection having a female sleeve receiving a flared first tube and a male sleeve receiving a flared second tube. The first tube is pushed against a flared seating surface formed in the female sleeve so that the flared end of the first tube is formed to match the flared seating of the female sleeve. Such an engagement would not prevent the tube to store energy due to elastic displacement when a torque is applied through the male sleeve during connection of the second tube.

WO 2013050106 discloses a screw socket quick-acting closure in particular for exhaust gas pipe systems of in particular internal combustion engines, in particular diesel-powered internal combustion engines, comprising at least one pipe which has at least one threaded piece disposed immovably and concentrically around the pipe, and at least one pipe having at least one screw closure which is longitudinally movable along the longitudinal axis of the pipe and is disposed rotatably and concentrically around said pipe, wherein the threaded piece and the screw closure are disposed so that they can be screwed together.

### BRIEF DESCRIPTION OF THE INVENTION

An object of the present invention is to provide an efficient tube-to-tube connection.
Accordingly, the present invention relates to a connecting device comprising a first tube with a flare at one end, a female sleeve including, at its inner side, an annular hole along its axis for receiving the first tube, and which is partially threaded at its inner circular wall, a second tube with a flare at one end so as to be communicated with the flare of the first tube, a male sleeve having an annular hole along an axis for receiving the second tube, and including, at its outer surface, threads corresponding to those of the female sleeve, and providing pressure for achieving connection wherein the first tube is configured to be fixed to the female sleeve prior to connection, characterised in that fixing of the first tube to the female sleeve is achieved by crimping the female sleeve.
In a further embodiment of the invention, a non-metal (preferably rubber) ring is arranged, to extend at least partially, on the external circular surface of the first tube, and the female sleeve is configured to circularly surround the non-metal ring. Fixing the first tube to the female sleeve is achieved by crimping the female sleeve at the area where the non-metal ring is located.
In another aspect, the invention relates to a method for providing the above-mentioned device, comprising the steps of:
a) placing, on a first tube, a female sleeve having, at its inner side, an annular hole along an axis, including a circumferential conical surface, and which is partially threaded at its inner circular wall,
b) forming a female flared-end by pressing an end of the first tube on the conical surface,
c) crimping of the female sleeve into the first tube,
d) tightening a male sleeve having an annular hole along an axis for receiving the second tube having a flare at an end thereof corresponding to that of the first tube, and having threads, at its outer surface, corresponding to those of the female sleeve, in order to achieve connection.

In case a non-metal ring is provided on the first tube, a rubber ring is placed on the first tube, and then the female sleeve is placed on the first tube such that it partially surrounds the non-metal ring, the male sleeve is screwed to achieve connection.

### BRIEF DESCRIPTION OF THE DRAWINGS

In order to provide a better understanding of the present invention and advantages thereof along with additional elements, it should be considered in connection with the drawings set out below.
Figure 1 is a sectional view of a female sleeve of a tube connecting device according to the invention and a first tube to be inserted therein.
Figure 2 is a sectional view of the female sleeve and the first tube inserted therein.
Figure 3 is sectional view after a flare is applied to the first end.
Figure 4 is a sectional view of the tube connecting device of the invention as mounted.

### DETAILED DESCRIPTION OF THE INVENTION

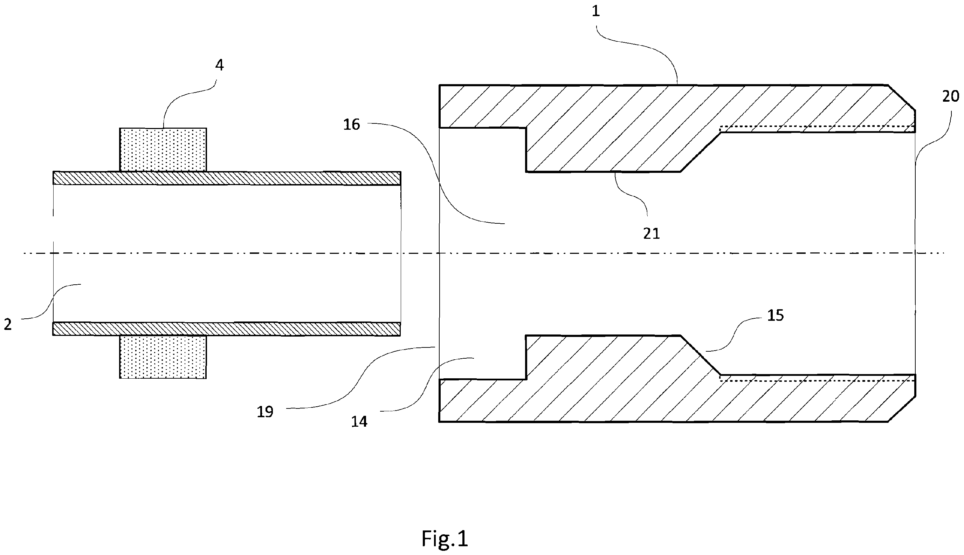

As shown in Figure 1, a non-metal ring (4) preferably made of rubber or a flexible plastic material and extending along a certain axial distance is fitted on the outer diameter of a first tube (2). In case the ring (4) is of rubber, it is preferably selected from ethylene propylenedienemonomer (EPDM) though it may be of any rubber material with similar characteristics. Similarly, although the first tube and the second tube to be described below may be made of any suitable material, they may for example be copper-coated steel tubes.

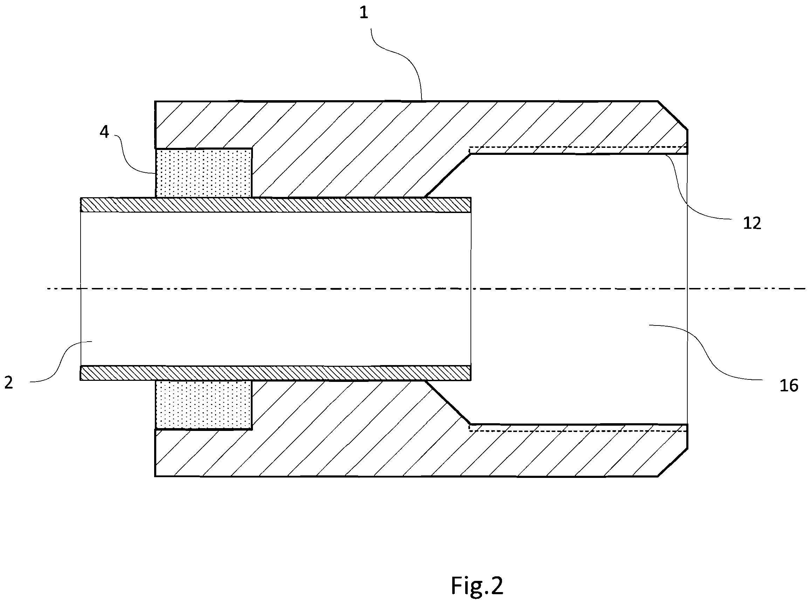

The first tube (2) is introduced into a female sleeve (1) having a circular female sleeve opening (16) along the axis by being moved through the first opening of the female sleeve (19), as shown in figure 2. Inside the female sleeve, a circular recess (14) is formed which extends from the first opening of the female sleeve (19) along a certain axial distance. The recess (14) is dimensioned so as to receive the non-metal ring (4) on the first tube, and when inserted, the non-metal ring (4) seats into this recess (14).

In case the non-metal ring (4) is not used, the first tube (2) is introduced into the female sleeve (1) having a circular female sleeve opening (16) along the axis by being moved through the first opening of the female sleeve (19). In that case, there is no need to form a recess (14) in the female sleeve. Use of the non-metal ring (4) may be advantageous especially in the crimping process which will be described below, because during which process the female sleeve may corrode the first tube or the coating thereon, thereby resulting in corrosion.

The female sleeve (1) comprises a surface surrounding the first tube (21), which surface follows the recess (14) and extends axially at a smaller diameter. As shown in figure 2, when the first tube (2) is inserted into the female sleeve (1), an end of the first tube extends in an axial direction such that it somewhat projects beyond the surface surrounding the first tube (21). At another end of the female sleeve (1), there is a second opening of the female sleeve (20), and on the circular opening extending axially therefrom, female sleeve threads (12) are formed. The diameter of the surface where the female sleeve threads (12) are formed is larger than that of the surface surrounding the first tube, and a female sleeve conical surface (15) is formed which connects said surfaces.

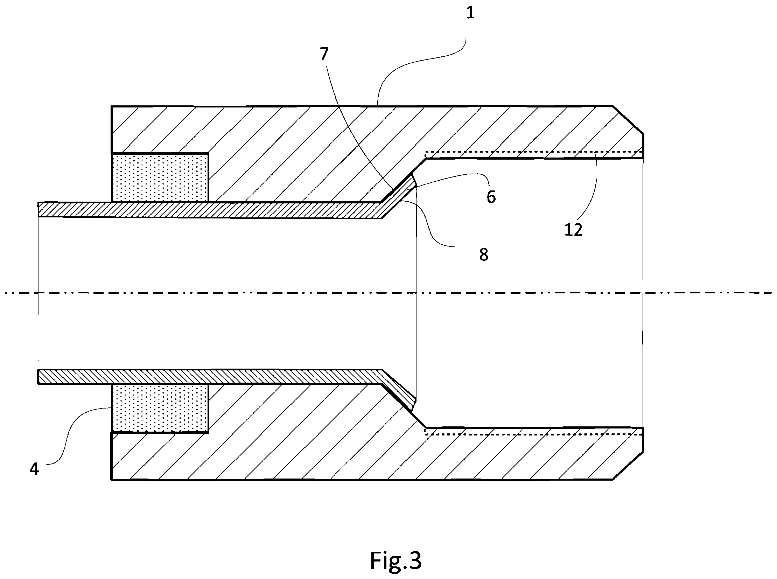

By applying pressure, via a male conical apparatus known from the art, on the end of the first tube (2) projecting beyond the surface surrounding the first tube (21), a female first tube flare (6) is formed and a front surface (7) of this flare rests on the female sleeve conical surface (15), as shown in figure 3. Then, on the outer diameter of the female sleeve which radially corresponds to the non-metal ring (4), crimping is performed by means of a suitable apparatus known from the art such as a crimping die-jaw, so that the female sleeve (1) is fixed to the first tube (2).

In the crimping process, it is ensured that no space is present between the conical front surface (7) of the first tube flare and the female sleeve conical surface (15).

In case the non-metal ring (4) is not used, crimping is again performed by means of a suitable apparatus so that the female sleeve (1) is fixed to the first tube (2). Also in this embodiment, in the crimping process, it is ensured that no space is present between the conical front surface (7) of the first tube flare and the female sleeve conical surface (15).

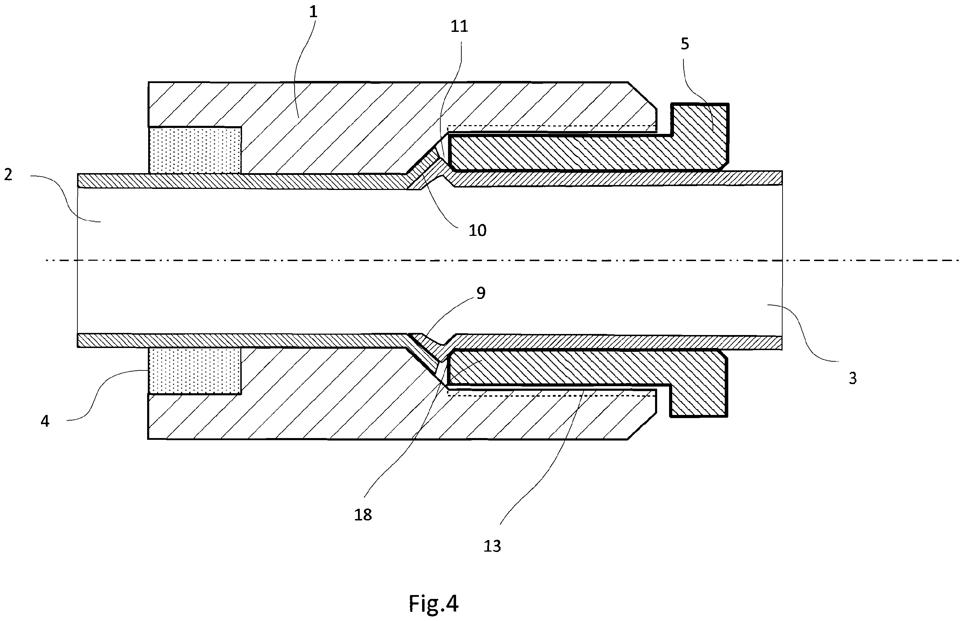

In order to achieve a tube-to-tube connection, a male sleeve (5) including a second tube (3) inserted through the hole opened along its axis is moved through the second opening of the female sleeve (20), as shown in figure 4. On the external surface of the male sleeve (5), male sleeve threads (12) are formed corresponding to the female sleeve threads (13). The second tube (3) comprises, at its end, a second male tube flare (9) and the male sleeve end (18) presses against the back surface of the second tube flare (11) during the connection in order to place the front surface of the second tube flare (10) on the back surface of the first tube flare (8). Torquing of the male sleeve (5) is maintained until a predetermined torque value is reached and thus the tube-to-tube connection is completed.

## Claims

1. A connecting device comprising a first tube (2) with a flare at one end (10); a female sleeve (1) including, at its inner side, an annular hole along its axis for receiving the first tube, and which is partially threaded at its inner circular wall (12); a second tube (3) with a flare (9) at one end so as to be communicated with the flare of the first tube; a male sleeve (5) having an annular hole along its axis for receiving the second tube, and including, at its outer surface, threads (13) corresponding to those of the female sleeve, and providing pressure for connection, the first tube being configured to be fixed to the female sleeve prior to connection, **characterized in that** the female sleeve for fixing the first tube to the female sleeve is crimped into the first tube.

2. A connecting device according to claim 1, **characterized by** comprising a non-metal ring (4) extending at least partially on the external circular surface of the first tube.

3. A connecting device according to claim 2, **characterized in that** said non-metal ring is of rubber material.

4. A connecting device according to claim 3, **characterized in that** said non-metal ring is made of ethylene propylenedienemonomer (EPDM).

5. A connecting device according to claim 2, **characterized in that** the female sleeve comprises a recess (14) for receiving the non-metal ring.

6. A connecting device according to any one of the preceding claims, **characterized in that** said first tube comprises a female flared end (8) and said second tube comprises a male flared-end (9).

7. A method of producing a connecting device according to claim 1, comprising the following steps of:
a) placing, on a first tube (2), a female sleeve (1) having, at its inner side, an annular hole along an axis, including a circumferential conical surface (15), and which is partially threaded at its inner circular wall,
b) forming a female flared-end (6) by pressing an end of the first tube on the conical surface,
c) crimping of the female sleeve into the first tube,
d) tightening a male sleeve (5) having an annular hole along an axis for receiving a second tube (3) having a flare (9) at an end thereof corresponding to that of the first tube, and having threads (13), at its outer surface, corresponding to those of the female sleeve, in order to achieve connection.

8. Method according to claim 7, **characterized by** comprising the steps of placing a non-metal ring on the first tube prior to step a, placing the female sleeve on the first tube in step b such that it surrounds the said non-metal ring, and in step c, crimping the female sleeve to the first tube including at the area where the non-metal ring is located.

9. Method according to claim 8, **characterized in that** said non-metal ring is of rubber material.

10. Method according to claim 9, **characterized in that** said rubber ring is made of ethylene propylenedienemonomer (EPDM).

11. Method according to claim 8, **characterized in that** the female sleeve comprises a recess for receiving the non-metal ring.

## Patentansprüche

1. Verbindungseinrichtung umfassend ein erstes Rohr (2) mit einer Bördelung an einem Ende (10), eine Muffe (1), die innenseitig entlang ihrer Achse eine ringförmige Öffnung zur Aufnahme des ersten Rohrs aufweist und an ihrer kreisförmigen Wand (12) teilweise mit einem Innengewinde versehen ist, ein zweites Rohr (3), das an einem Ende mit einer Bördelung (9) versehen ist so dass eine Verbindung mit der Bördelung am ersten Rohr hergestellt werden kann, ein Nippel (5), der entlang seiner Achse eine ringförmige Öffnung zur Aufnahme des zweiten Rohrs aufweist und an seiner Außenfläche mit einem Außengewinde (13) versehen ist, der dem Innengewinde der Muffe entspricht und somit einen Kraftschluss bereitstellt, wobei das erste Rohr so ausgestaltet ist, dass es vor der Herstellung der Verbindung an die Muffe fest angebracht wird, **dadurch gekennzeichnet, dass** die Muffe zum Befestigen des ersten Rohrs an die Muffe in das erste Rohr eingeschrumpft wird.

2. Verbindungseinrichtung nach Anspruch 1, **dadurch gekennzeichnet, dass** die Verbindungseinrichtung einen nichtmetallischen Ring (4) aufweist, der sich zumindest teilweise auf der äußeren Kreisfläche des ersten Rohres erstreckt.

3. Verbindungseinrichtung nach Anspruch 2, **dadurch gekennzeichnet, dass** der nichtmetallische Ring aus Kautschuk gefertigt ist.

4. Verbindungseinrichtung nach Anspruch 3, **dadurch gekennzeichnet, dass** der nichtmetallische Ring aus Ethylen-Propylen-Dien-Kautschuk (EPDM) gefertigt ist.

5. Verbindungseinrichtung nach Anspruch 2, **dadurch gekennzeichnet, dass** die Muffe eine Aussparung (14) zur Aufnahme des nichtmetallischen Rings aufweist.

6. Verbindungseinrichtung nach einem der vorhergehenden Ansprüche, **dadurch gekennzeichnet, dass** das erste Rohr ein Rohrende mit Innenbördel (8) und das zweite Rohr ein Rohrende mit Außenbördel (9) umfasst.

7. Verfahren zum Herstellen einer Verbindungseinrichtung nach Anspruch 1, umfassend die folgende Verfahrensschritte:
a) Aufbringen einer Muffe (1) auf ein erstes Rohr (2), die innenseitig entlang ihrer Achse eine ringförmige Öffnung sowie eine kegelförmige Umfangsfläche (15) umfasst und an ihrer kreisförmigen Wand (12) teilweise mit einem Innengewinde versehen ist,
b) Gestaltung eines Rohrendes mit Innenbördel (6) indem ein Ende des ersten Rohrs auf die kegelförmige Umfangsfläche aufgepresst wird,
c) Schrumpfverbindung der Muffe an das erste Rohr,
d) Anziehen eines Nippels (5) der entlang seiner Achse eine ringförmige Öffnung zur Aufnahme eines zweiten, an einem Ende mit einer Bördelung (9) versehenen Rohrs (3) aufweist und an seiner Außenfläche mit einem Außengewinde (13) versehen ist, der dem Innengewinde der Muffe entspricht und somit eine kraftschlüssige Verbindung bereitstellt.

8. Verfahren nach Anspruch 7, **dadurch gekennzeichnet, dass** das Verfahren vor dem Verfahrensschritt (a) das Aufbringen eines nichtmetallischen Rings auf das erste Rohr, im Verfahrensschritt (b) das Aufbringen der Muffe auf das erste Rohr, so dass die Muffe den nichtmetallischen Ring umgibt, und im Verfahrensschritt (c) das Schrumpfverbinden der Muffe an das erste Rohr einschließlich der Fläche, wo der nichtmetallische Ring angeordnet ist, umfasst.

9. Verfahren nach Anspruch 8, **dadurch gekennzeichnet, dass** der nichtmetallische Ring aus Kautschuk gefertigt ist.

10. Verfahren nach Anspruch 9, **dadurch gekennzeichnet**, der nichtmetallische Ring aus Ethylen-Propylen-Dien-Kautschuk (EPDM) gefertigt ist.

11. Verfahren nach Anspruch 8, **dadurch gekennzeichnet, dass** die Muffe mit einer Aussparung für die Aufnahme der nichtmetallischen Rings versehen ist.

## Revendications

1. Un dispositif de connexion comprenant un premier tube (2) avec une torche à une extrémité (10); un manchon femelle (1) comprenant, sur son côté intérieur, un trou annulaire le long de son axe pour recevoir le premier tube, et qui est partiellement fileté sur sa paroi circulaire intérieure (12); un deuxième tube (3) avec un évasement (9) à une extrémité de manière à communiquer avec l'évasement du premier tube; un manchon mâle (5) ayant un trou annulaire le long de son axe pour recevoir le deuxième tube, et comprenant, à sa surface extérieure, des filetages (13) correspondant à ceux du manchon femelle, et fournissant une pression de connexion, le premier tube étant configuré pour être fixé au manchon femelle avant la connexion, **caractérisé en ce que** le manchon femelle pour fixer le premier tube au manchon femelle est serti dans le premier tube.

2. Un dispositif de raccordement selon la revendication 1, **caractérisé en ce qu'**il comprend un anneau non métallique (4) s'étendant au moins partiellement sur la surface circulaire externe du premier tube.

3. Un dispositif de connexion selon la revendication 2, **caractérisé en ce que** le dit anneau non métallique est en matériau caoutchouc.

4. Un dispositif de connexion selon la revendication 3, **caractérisé en ce que** ledit anneau non métallique est en monomère d'éthylène-propylène-diène (EPDM).

5. Un dispositif de connexion selon la revendication 2, **caractérisé en ce que** le manchon femelle comprend un évidement (14) pour recevoir la bague non métallique.

6. Un dispositif de raccordement selon l'une des revendications précédentes, **caractérisé en ce que** ledit premier tube comprend une extrémité évasée femelle (8) et ledit deuxième tube comprend une extrémité évasée mâle (9).

7. Une méthode de fabrication d'un dispositif de connexion selon la revendication 1, comprenant les étapes suivantes de:
a) Placer, sur un premier tube (2), un manchon femelle (1) ayant, à son côté intérieur, un trou annulaire le long d'un axe, comprenant une surface conique circonférentielle (15) et qui est partiellement fileté à sa paroi circulaire intérieure,
b) Former une extrémité évasée femelle (6) en pressant une extrémité du premier tube sur la surface conique,
c) Sertissage du manchon femelle dans le premier tube,
d) Serrage d'un manchon mâle (5) ayant un trou annulaire le long d'un axe pour recevoir un deuxième tube (3) ayant une évasement (9) à une extrémité de celui-ci correspondant à celle du premier tube, et ayant des filetages (13) à sa surface extérieure, correspondant à celles du manchon femelle, afin de réaliser la connexion.

8. Méthode selon la revendication 7, **caractérisé en ce qu'**il comprend les étapes de mise en place d'un anneau non métallique sur le premier tube avant l'étape a, placement du manchon femelle sur le premier tube à l'étape b de telle sorte qu'il entoure ledit anneau non métallique, et à l'étape c, sertissage du manchon femelle au premier tube, y compris à l'endroit où se trouve l'anneau non métallique.

9. Méthode selon la revendication 8, **caractérisé en ce que** ledit anneau non métallique est en matériau caoutchouc.

10. Méthode selon la revendication 9, **caractérisé en ce que** ledit anneau en caoutchouc est en monomère éthylène propylène diène (EPDM).

11. Méthode selon la revendication 8, **caractérisé en ce que** le manchon femelle comprend une niche pour recevoir l'anneau non métallique.
